# EUROPEAN PATENT APPLICATION

(11) **EP 4 648 136 A1**
(43) Date of publication of application: **12.11.2025**
(21) Application number: 24861372.1
(22) Date of filing: 30.09.2024
(51) Int. Cl.: H01M 4/525, H01M 10/0525

(54) **POSITIVE ELECTRODE MATERIAL AND PREPARATION METHOD THEREFOR, AND BATTERY**

(71) Applicant: BTR Mediterranean New Material Technology, Assilah, Tanger (MA); BTR (Jiangsu) New Material Technology Co., Ltd, Changzhou, Jiangsu 213200 (CN)
(72) Inventor: WANG, Yu, Changzhou Jiangsu 213200 (CN); HUANG, Shuxian, Changzhou Jiangsu 213200 (CN); SONG, Xiong, Changzhou Jiangsu 213200 (CN); ZHENG, Yu, Changzhou Jiangsu 213200 (CN); YANG, Pingzhou, Changzhou Jiangsu 213200 (CN); YANG, Shunyi, Changzhou Jiangsu 213200 (CN)
(74) Representative: Hautier IP - MC/EP
(86) International application number: PCT/CN2024/122936
(87) International publication number: WO 2025/167146

(57) **Abstract**

A cathode material, a preparation method thereof, and a battery provided. The cathode material is a nickel-lithium cobalt oxide based composite oxide including a core and a surface reconstruction layer arranged outside the core, where the surface reconstruction layer is a region etched away by dissolving the cathode material with 100 times diluted aqua regia for 30 minutes, with an ambient temperature controlled to be 300°C during dissolution, and the core is a remaining region after the surface reconstruction layer is etched away from the cathode material, and where the core has a Li molar content of m1, the surface reconstruction layer has a Li molar content of m2, and 1.3≤m2/m1≤4.0. The cathode material provided is improved stability of crystal structure while having high capacity, thereby improving cycle stability of the cathode material and improving withstand voltage of the cathode material.

## Description

### TECHNICAL FIELD

The present disclosure relates to the technical field of cathode material, and in particular, to a cathode material, a preparation method thereof, and a battery.

### BACKGROUND

In recent years, lithium ion battery has been widely applied in modern portable electronic devices, and has a broad market in hybrid vehicles and pure electric vehicles due to its advantages such as high specific energy, high working voltage, long cycle life, no memory effect, and environmental friendliness. A cathode material is often a bottleneck affecting energy density of a battery. A layered ternary cathode material has the characteristics of high discharge capacity, good cycle life and low cost, which is a cathode material with a good application prospect. The reversible specific capacity and cycle stability of the cathode material can be improved by increasing a nickel content of the cathode material, thereby making the cathode material more suitable for a high specific energy power battery.

However, with an increase of Ni content, the structural stability deteriorates. And, the particle phase structure, during charging and discharging, undergoes irreversible phase transitions, i.e., from a layered structure to a spinel structure and then to an inactive rock salt phase, resulting in degradation of capacity and cycling performance. Moreover, in cycling of the ternary cathode material, Li⁺ ions deintercalating from the cathode material during charging causes increasing of interlayer spacing and expansion of grains, while the Li⁺ ions intercalating into the cathode material during discharging causes reducing of interlayer spacing and contraction of grains. As degrees of charging and discharging increases, expansion/contraction of the cathode material grains is exacerbated, leading to increasing of internal stress in particles of the cathode material, causing the particles of the cathode material to tend to crack and pulverize, and affecting cycle life and safety performance of the battery.

### SUMMARY

The present disclosure provides a cathode material, a preparation method thereof, and a battery. The cathode material is improved stability of crystal structure while having high capacity, thereby improving cycle stability of the cathode material and improving withstand voltage of the cathode material.

According to a first aspect, the present disclosure provides a cathode material. The cathode material is a nickel-lithium cobalt oxide based composite oxide. The nickel-lithium cobalt oxide based composite oxide includes a core and a surface reconstruction layer arranged outside the core. The surface reconstruction layer is a region etched away by dissolving 0.3g of the cathode material with 100 times diluted 0.4 ml of aqua regia for 30 minutes, with an ambient temperature controlled to be 300°C during dissolution, and the core is a remaining region after the surface reconstruction layer is etched away from the cathode material. The core has a Li molar content of m1, the surface reconstruction layer has a Li molar content of m2, and 1.3≤m2/m1≤4.0.

According to a second aspect, the present disclosure further provides a cathode material. The cathode material is a nickel-lithium cobalt oxide based composite oxide. The nickel-lithium cobalt oxide based composite oxide includes a core and a surface reconstruction layer arranged outside the core. The surface reconstruction layer is a region etched away by dissolving 0.3g of the cathode material with 100 times diluted 0.4 ml of aqua regia for 30 minutes, with an ambient temperature controlled to be 300°C during dissolution, and the core is a remaining region after the surface reconstruction layer is etched away from the cathode material. The surface reconstruction layer has a Li molar content of m2, the cathode material has a total Li molar content of m_{Li total}, and 1.1≤m2/m_{Li total}≤3.0.

According to a third aspect, the present disclosure provides a preparation method of a cathode material. The preparation method includes:
performing a primary sintering on a first mixture including a cathode material precursor and a lithium-containing compound to obtain a core matrix material. The core matrix material has a chemical formula of Li_{1-δ}NiₐCo_{b}M_{c}M1_{1-a-b-c}O₂, where -0.05≤δ≤0.05, 0.3≤a < 1.0, 0.01≤b≤0.3, 0≤c≤0.5, 0≤1-a-b-c≤0.05, M denotes Mn and/or Al, and M1 denotes a metal element; and
performing a secondary sintering on a second mixture including a surface reconstruction material and the core matrix material to obtain the cathode material. The surface reconstruction material includes at least one of NiᵣCoₚM_{q}M3_{1-r-p-q}(OH)₂, NiᵣCoₚM_{q}M3_{1-r-p-q}OOH and (NiᵣCoₚM_{q}M3_{1-r-p-q})O_{d}, where 0≤r≤0.5, 0.3≤p≤1, 0≤q≤0.5, 0≤1-r-p-q≤0.2, 1≤d≤2, M denotes Mn and/or Al, and M3 denotes a metal element.

According to a fourth aspect, the present disclosure provides a battery. The battery includes the cathode material according to the first aspect or the second aspect.

Compared with the related art, the present disclosure has at least the following beneficial effects:
In the cathode material provided by the present disclosure, the Li molar content of the core is lower than that of the surface reconstruction layer, so that a lithium ion concentration gradient is formed between inner and outer layers of the cathode material. During charging and discharging, the core has a lower lithium ion deintercalation reaction activity than that of the surface reconstruction layer, thus lithium ions are preferentially deintercalated in the surface reconstruction layer. Due to a lower lithium ion deintercalation degree in the core than that in the surface reconstruction layer, the core has a smaller variation amplitude on lattice parameter than that of the surface reconstruction layer, resulting in a reduced lattice expansion/contraction stress in the core, and a lattice expansion/contraction stress in the surface reconstruction layer is easily released outside particles of the cathode material, thereby effectively reducing cracking and crushing of the particles of the cathode material, improving cycle life of the cathode material, and increasing withstand voltage of the cathode material. In addition, a higher lithium ion molar content in the surface reconstruction layer further improve lithium ion conductivity of the cathode material, and improve rate performance of the cathode material.

In the cathode material provided by the present disclosure, the Li molar content of the surface reconstruction layer of the cathode material is higher than the total Li molar content of the cathode material, that is, the molar content of lithium ions of the surface reconstruction layer of the cathode material is higher than that of other regions of the cathode material. A lithium ion concentration gradient is formed between inner and outer layers of the cathode material. During charging and discharging, the core has a lower lithium ion deintercalation reaction activity than that of the surface reconstruction layer, thus lithium ions are preferentially deintercalated in the surface reconstruction layer. Due to a lower lithium ion deintercalation degree in the core than that in the surface reconstruction layer, the core has a smaller variation amplitude on lattice parameter than that of the surface reconstruction layer, resulting in a reduced lattice expansion/contraction stress in the core, and a lattice expansion/contraction stress in the surface reconstruction layer is easily released outside particles of the cathode material, thereby effectively reducing cracking and crushing of the particles of the cathode material, improving cycle life of the cathode material, and increasing withstand voltage of the cathode material. In addition, a higher lithium ion molar content in the surface reconstruction layer further improve lithium ion conductivity of the cathode material, and improve rate performance of the cathode material.

The present disclosure further provides a preparation method of the cathode material. The surface reconstruction material and the core matrix material are mixed and then sintered to obtain the cathode material. The surface reconstruction material has a high uniformity on composition elements with that of the core matrix material, thus a difference in their lattice parameters is less. In addition, the surface reconstruction material of the present disclosure has a stronger ability to bind to Li than that of the core matrix material, and has a lower Ni molar content and a higher Co and/or M molar content than that of the core matrix material. Co and M have a stronger binding ability to Li than that of Ni to Li. Therefore, during the sintering, Co and M in the surface reconstruction material extracts part of Li from the core matrix material to participate in surface reconstruction of the cathode material. The surface reconstruction material plays a role as "pumping", so that in the prepared cathode material, the surface reconstruction layer has a higher Li molar content than that of the core.

### BRIEF DESCRIPTION OF DRAWINGS

The following further describes the present disclosure with reference to the drawings and embodiments.
FIG. 1 is a schematic structural diagram of a cathode material according to an embodiment of the present disclosure;
FIG. 2 is a schematic diagram of a battery in a discharging state according to an embodiment of the present disclosure;
FIG. 3a is a scanning electron microscopy (SEM) image of the cathode material prepared by Example 1 of the present disclosure;
FIG. 3b is an SEM image of the matrix material prepared by Example 1 of the present disclosure; and
FIG. 4 is a comparison diagram of cycling performances of the cathode materials prepared by Example 1 and Comparative Example 1 of the present disclosure.

### DESCRIPTION OF EMBODIMENTS

For better understanding the technical solutions of the present disclosure, the following describes the embodiments of the present disclosure in detail with reference to the drawings.

It should be understood that the described embodiments are merely some but not all embodiments of the present disclosure. Based on the embodiments of the present disclosure, all other embodiments obtained by those skilled in the art without creative efforts fall within the scope of the present disclosure.

The terms used in the embodiments of the present disclosure are merely for the purpose of describing specific embodiments, and are not intended to limit the present disclosure. The singular forms "a", "the" and "the" used in the embodiments of the present disclosure and the appended claims are also intended to include plural forms unless the context clearly indicates other meanings.

It should be understood that the term "and/or" used herein is merely an association relationship describing an associated object, indicating that there may be three relationships, for embodiment, A and/or B, which may indicate three cases in which A exists separately, A and B exist simultaneously, and B exists separately. In addition, the character "/" herein generally indicates that the associated object is an "or" relationship.

At present, in a conventional multi-element cathode material, a core and an outer layer of particles of the cathode material have an uniform concentration distribution on each element, a close degrees of Li⁺ deintercalation during charging and discharging, and a close variation amplitude on lattice parameters. A stress of the outer layer may be effectively released to outside. However, an internal stress of the particles of the cathode material tends to accumulate and is difficult to be effectively released.

Further, due to differences in lattice parameters of lithium nickel oxide, lithium cobalt oxide, and lithium manganate in the multi-element cathode material, the lithium ions have various difficulty levels on deintercalation from different crystal structures. The lithium ions are easiest to deintercalate from lithium nickel oxide, and are most difficult to deintercalate from lithium manganite. Therefore, at a conventional concentration gradient, different lithium ion deintercalation rates are caused due to different Ni, Co and Mn contents in inner and outer layers. The inner layer has a higher nickel molar content, and has easier lithium deintercalation than the outer layer, causing a greater change in lattice size of the core. The larger lattice expansion/contraction stresses cause cracking and crushing of the particles of the multi-element cathode material, seriously affecting service life of the cathode material, and it is difficult for the cathode material to fully exert original advantages thereof.

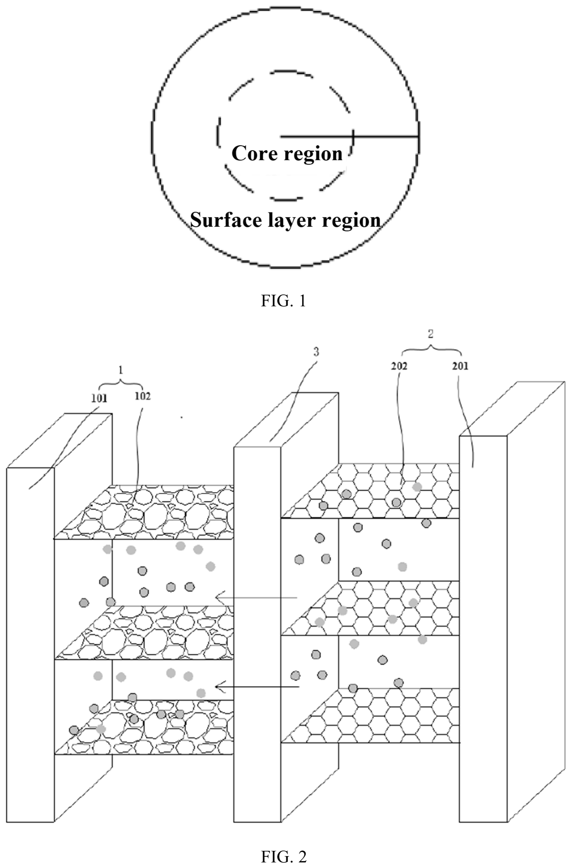

According to a first aspect, the present disclosure provides a cathode material, as shown in FIG. 1. The cathode material is a nickel-lithium cobalt oxide based composite oxide. The nickel-lithium cobalt oxide based composite oxide includes a core and a surface reconstruction layer arranged outside the core. The surface reconstruction layer is a region etched away by dissolving 0.3g of the cathode material with 100 times diluted 0.4 ml of aqua regia for 30 minutes, with an ambient temperature controlled to be 300°C during dissolution, and the core is a remaining region after the surface reconstruction layer is etched away from the cathode material. The core has a Li molar content of m1, the surface reconstruction layer has a Li molar content of m2, and 1.3≤m2/m1≤4.0.

In the cathode material provided by the present disclosure, the Li molar content of the core is lower than that of the surface reconstruction layer, so that a lithium ion concentration difference is formed between inner and outer layers of the cathode material. During charging and discharging, the core has a lower lithium ion deintercalation reaction activity than that of the surface reconstruction layer, thus lithium ions are preferentially deintercalated in the surface reconstruction layer. Due to a lower lithium ion deintercalation degree in the core than that in the surface reconstruction layer, the core has a smaller variation amplitude on lattice parameter than that of the surface reconstruction layer, resulting in a reduced lattice expansion/contraction stress in the core, and a lattice expansion/contraction stress in the surface reconstruction layer is easily released outside particles of the cathode material, thereby effectively reducing cracking and crushing of the particles of the cathode material, improving cycle life of the cathode material, and increasing withstand voltage of the cathode material. In addition, a higher lithium ion molar content in the surface reconstruction layer further improve lithium ion conductivity of the cathode material, and improve rate performance of the cathode material.

In some embodiments, m2/m1 may be specifically 1.3, 1.5, 1.6, 1.8, 2.0, 2.5, 2.8, 2.9, 3.0, 3.2, 3.5, 3.8, or 4.0, etc., or other value within the above range, which is not limited herein. When m2/m1 is too high, that is, the surface reconstruction layer has a too high Li molar content, the cathode material may has a greatly increased surface residual alkali content, which does not facilitate to improve initial effect of the cathode material, and processing performance of the material may also be decreased. When m2/m1 is too low, that is, the core has a too high Li molar content, the cathode material may have an increased molar concentration of an overall lithium element, resulting in a greatly increased gas expansion ratio of a cell prepared by the cathode material, and a reduced safety performance. When both m2 and m1 are too low, gram capacity and cycle life of the cathode material may be affected.

In some embodiments, the surface reconstruction layer has a Li molar content of m2, the cathode material has a total Li molar content of m_{Li total}, and 1.1≤m2/m_{Li total}≤3.0. m2/m_{Li total} may be specifically 1.1, 1.15, 1.2, 1.5, 1.8, 1.9, 2, 2.1, 2.2, 2.3, 2.5, 2.9, or 3.0, etc., or other value within the above range, which is not limited herein. The Li molar content of the surface reconstruction layer of the cathode material is higher than the total Li molar content of the cathode material, that is, the molar content of lithium ions of the surface reconstruction layer of the cathode material is higher than that of the core. A lithium ion concentration difference is formed between inner and outer layers of the cathode material. During charging and discharging, the core has a lower lithium ion deintercalation reaction activity than that of the surface reconstruction layer, thus lithium ions are preferentially deintercalated in the surface reconstruction layer, and the expansion/contraction stresses generated by deintercalation may be effectively released.

It should be noted that, the Li molar content herein refers to a ratio of molar weight of Li in all lattice structures of the cathode material except free-Li⁺ on surface and sum of molar weights of all metal elements except Li, that is, m_{Li}=n(Li):n(Ni+Co+Mn+M1). The free-Li⁺ on surface, for example, includes lithium ions in compounds such as Li₂CO₃, LiOH, etc. remaining on the surface of the cathode material. In addition, the nickel-lithium cobalt oxide based composite oxide, i.e., nickel-lithium cobalt oxide based cathode material, may be lithium nickel cobalt manganese oxide (NCM) cathode material, or lithium nickel cobalt aluminate (NCA) cathode material.

In some embodiments, the surface reconstruction layer has a chemical formula of Li_{1+λ}aNiₓCo_{y}M_{z}M1_{1-x-y-z}O₂, where 0.01≤λ≤2, 0≤x≤0.5, 0.3≤y≤1, 0≤z≤0.5, 0≤1-x-y-z≤0.2, M denotes Mn and/or Al, and M1 denotes a metal element.

In the present disclosure, weighing 0.3 g of cathode material, diluting 0.4 mL of aqua regia for 100 times and then adding to the cathode material for dissolution under heating, with an ambient temperature controlled to be 300°C and a dissolution time of 30 minutes, filtering the obtained solution, washing, fixing in volume, diluting for 100 times, and testing by ICP to measure molar contents of Li, Ni, Co, M and M1, where the molar content of Li, denoted as m2, represents the Li molar content of the surface reconstruction layer. It can be understood that, due to low concentration and molar weight of the 100 times diluted 0.4 mL of aqua regia, only the surface reconstruction layer of the particles of the cathode material may be dissolved.

Weighing 0.3 g of cathode material, diluting 8 mL of aqua regia for 5 times and then adding into the cathode material for dissolution under heating, with an ambient temperature controlled to be 300°C and a dissolution time of 30 minutes, filtering the obtained solution, washing, fixing in volume, diluting for 100 times, and testing by ICP to measure molar contents of Li, Ni, Co, M and M1, where the molar content of Li, denoted as m_{Li total}, represents the total Li molar content of the cathode material, and the core has the Li molar content of m1 = (m_{Li total}*w1-m2*w2)/(w1-w2), where w1 denotes total molar weight of 0.3g of the cathode material, and w2 denotes molar weight of the surface reconstruction layer. It can be understood that, due to relatively high concentration and molar weight of the 5 times diluted 8 mL of aqua regia, the particles of the cathode material may be completely dissolved.

In some embodiments, the surface reconstruction layer has a chemical formula of Li_{1+λ}NiₓCo_{y}M_{z}M1_{1-x-y-z}O₂. A value of λ may be 0.01, 0.02, 0.05, 0.08, 0.1, 0.15, 0.18, 0.2, 0.25, 0.5, 0.8, 1, 1.25, 1.5, 1.8, or 2, etc. A value of x may be 0, 0.1, 0.12, 0.15, 0.2, 0.25, 0.3, 0.35, 0.4, 0.45 or 0.5, etc. A value of y may be 0.3, 0.4, 0.5, 0.6, 0.7, 0.8, 0.9 or 1, etc. A value of z may be 0, 0.1, 0.15, 0.2, 0.25, 0.3, 0.35, 0.4, 0.45, or 0.5, etc. M1 may account for a molar content of 0, 0.001, 0.002, 0.005, 0.01, 0.05, 0.1, 0.15, 0.18, or 0.2, etc.

In some embodiments, the metal element M1 includes at least one of Al, Ti, Y, Zr, Mg, Sr, W, Nb, Ce, La, Mo, and Dy. For example, the metal element M1 may be present in the cathode material as a metal element or as a coating element.

It should be noted that contents of each elements in the cathode material may be determined by a well-known instrument for qualitative analysis and/or quantitative analysis of each elements, such as ICP and ICP-MS.

In some embodiments, the core has a greater Ni molar content than Ni molar content of the surface reconstruction layer. It can be understood that, the surface reconstruction layer has a low Ni molar content, which improves the cathode material and an electrolyte away from a side reaction, and improves cycle life of the cathode material. In the present disclosure, the core of the cathode material has a low Li molar content and a high Ni molar content, so that expansion/contraction effects of the core of the cathode material are weakened during lithium deintercalation, thereby improving structure stability of the particles. Meanwhile, the surface reconstruction layer of the cathode material has a high Li molar content and a low Ni molar content, so that expansion/contraction stresses in the cathode material are well released. Moreover, the side reaction between the cathode material and the electrolyte is reduced, thereby improving cycle stability of the cathode material. Therefore, the cathode material has all of high voltage, high rate, and good cycling performance.

In some embodiments, the core has a lower molar content of remaining metal elements except Li and Ni than molar content of remaining metal elements except Li and Ni of the surface reconstruction layer. It can be understood that, the core has a lower molar content of Co and M than that of the surface reconstruction layer. The higher molar content of Co and M of the surface reconstruction layer inhibits a transition of crystalline phase of the cathode material from H2 to H3, and the surface reconstruction layer of the cathode material has a better structure stability of crystalline phase. In addition, more metal element M1 in the surface reconstruction layer reduces reactivity of the cathode material and electrolyte. The molar contents of several elements of the cathode material vary in a gradient, and these elements cooperate with each other, thereby further improving electrochemical performance of the cathode material, and better exerting performances of the cathode material.

In some embodiments, 0.6≤m1<1, and m1 may be specifically 0.6, 0.7, 0.8, 0.85, 0.9, 0.95, or 0.99, etc., which is not limited herein. It has been found through experiments that when the Li molar content of the core is controlled within the above range, the cathode material has better electrochemical performances.

In some embodiments, the surface reconstruction layer has a chemical formula of Li_{1+λ}NixCo_{y}M_{z}M1_{1-x-y-z}O₂, where 0.1≤λ≤2, that is, a molar ratio of n(Li): n(Ni+Co+M+M1) is 1.1 to 3.

In some embodiments, a molar ratio of the lithium element to all remaining metal elements (Me) in the cathode material is (0.95-1.05):1. For example, a ratio of n(Li)/n(Me) may be specifically 0.95:1, 0.96:1, 0.98:1, 1.0:1, 1.02:1, 1.03:1, or 1.05:1, etc., where Me represents a molar content of all remaining metals except Li in the cathode material.

A value of n(Li):n(Ni+Co+M+M1) in the surface reconstruction layer is controlled to be 1.1 to 3, and a ratio of n(Li)/n(Me) of overall particle of the cathode material is controlled to be within the range of (0.95-1.05):1. Thus, stress caused by a lattice parameter change of the cathode material is transferred from the core to the surface reconstruction layer to the maximum extent, and then released to the outside, thereby comprehensively improving electrochemical performances of the cathode material.

In some embodiments, the surface reconstruction layer accounts for a percentage content by mass of 5 wt% to 50 wt% in the cathode material, which may be specifically 5 wt%, 10 wt%, 15 wt%, 20 wt%, 25 wt%, 30 wt%, 35 wt%, 40 wt%, or 50 wt%, etc., or other value within the above range, which is not limited herein. When the surface reconstruction layer has a too less percentage content by mass in the cathode material, the surface reconstruction layer of the cathode material is difficult to effectively protect the core, and it is difficult for the core and the surface reconstruction layer to form an effective concentration difference of lithium element. When the surface reconstruction layer has a too high percentage content by mass in the cathode material, the surface reconstruction layer of the cathode material has an increased thickness, and expansion stress of the core is difficult to be effectively transferred due to the excessive thick of surface reconstruction layer. The expansion stress of the core is difficult to effectively release, thereby reducing cycling performance of the cathode material. By controlling the percentage content by mass of the surface reconstruction layer within 5 wt% to 40 wt%, the expansion/contraction stresses in the cathode material are effectively released. A proper concentration gradient of lithium ion is beneficial to improving cycle structure stability of the cathode material. More preferably, the surface reconstruction layer accounts for a percentage content by mass of 7 wt% to 40 wt% in the cathode material.

In some embodiments, the cathode material has free lithium accounting for a percentage content by mass of 200 ppm to 1000 ppm, which may be specifically 200 ppm, 300 ppm, 400 ppm, 500 ppm, 600 ppm, 800 ppm or 1000 ppm, etc., or other value within the above range, which is not limited herein. The free lithium in the cathode material is mainly derived from alkaline impurities on surface of the cathode material, such as Li₂CO₃ and LiOH, etc. By controlling content of the free lithium of the cathode material, a corrosion effect of the alkaline impurities on the cathode material is reduced, thus structural stability of the cathode material is protected, thereby improving cycle stability of the cathode material. The percentage content by mass of the free lithium in the cathode material increases with the increase of Ni content. Preferably, the free lithium accounts for a percentage content by mass of 200 ppm to 600 ppm.

In some embodiments, the cathode material has a specific surface area of 0.2 m²/g to 2.0 m²/g, which may be specifically 0.2 m²/g, 0.5 m²/g, 0.8 m²/g, 1.0 m²/g, 1.5 m²/g, 1.8 m²/g, or 2.0 m²/g, etc., or other value within the above range, which is not limited herein. By controlling the specific surface area of the cathode material within the foregoing range, occurrence of a side reaction between the cathode material and the electrolyte is reduced, and the cathode material exhibits more excellent cycle stability.

In some embodiments, the cathode material has a true density of 4.6 g/cm³ to 4.8 g/cm³, which may be specifically 4.6 g/cm³, 4.65 g/cm³, 4.68 g/cm³, 4.70 g/cm³, 4.72 g/cm³, 4.75 g/cm³, 4.78 g/cm³, 4.79 g/cm³, or 4.8 g/cm³, etc., which is not limited herein.

According to a second aspect, the present disclosure provides a preparation method of a cathode material, including:
Step S10, performing a primary sintering on a first mixture including a cathode material precursor and a lithium-containing compound to obtain a core matrix material. The core matrix material has a chemical formula of Li_{1-δ}NiₐCo_{b}M_{c}M1_{1-a-b-c}O₂, where -0.05≤δ≤0.05, 0.3≤a < 1.0, 0.01≤b≤0.3, 0≤c≤0.5, 0≤1-a-b-c≤0.05, M denotes Mn and/or Al, and M1 denotes a metal element; and
Step S20, performing a secondary sintering on a second mixture including a surface reconstruction material and the core matrix material to obtain the cathode material. The surface reconstruction material includes at least one of NiᵣCoₚM_{q}M3_{1-r-p-q}(OH)₂, NiᵣCoₚM_{q}M3_{1-r-p-q}OOH and (NiᵣCoₚM_{q}M3_{1-r-p-q})O_{d}, where 0≤r≤0.5, 0.3≤p≤1, 0≤q≤0.5, 0≤1-r-p-q≤0.2, 1≤d≤2, M denotes Mn and/or Al, and M3 denotes a metal element.

In the above technical solution, the surface reconstruction material and the core matrix material are adopted for secondary sintering. Since the surface reconstruction material has a high uniformity on composition elements with that of the core matrix material, a difference in their lattice parameters is less. In addition, the surface reconstruction material of the present disclosure has a strong ability to bind to Li element, and has a lower Ni molar content and a higher Co and/or M molar content than that of the core matrix material. Co and M have a stronger binding ability to Li than that of Ni to Li. Therefore, during the secondary sintering, Co and M in the surface reconstruction material extracts part of Li from the core matrix material to participate in surface reconstruction of the cathode material. The surface reconstruction material plays a role as "pumping", so that in the prepared cathode material, the surface reconstruction layer has a higher Li molar content than that of the core.

In the cathode material prepared by the present disclosure, the core has a lower Li molar content than that of the core matrix material (preparation raw material). That is because part of Li is extracted from the core matrix material to participate in surface reconstruction of the cathode material. It is verified that when the Li molar content m1 in the core of the finally prepared cathode material is 0.6 to 1.0, the cathode material has better electrochemical performances. The surface reconstruction material is combined with the Li extracted from the core matrix material to form a Li-containing compound (i.e., the surface reconstruction layer), and in the prepared cathode material, the surface reconstruction layer has a higher Li molar content than that of the core.

In addition, in the cathode material prepared by embodiments of the present disclosure, the surface reconstruction layer has a greater Li ion concentration than that of the core. This difference in the Li ion concentrations is not formed during the precursor preparation stage, nor during a stage in which the precursor and the lithium-containing compound are subjected to a solid phase reaction after the primary sintering to generate a layered structure material, but is formed by performing the surface reconstruction on the core matrix material. Therefore, in the present disclosure, the surface reconstruction process on the matrix material is not limited by a type of the matrix material or by a temperature of the primary sintering, and is applicable to a polycrystalline matrix material or a monocrystalline matrix material. The concentrations of several composition elements in the prepared cathode material are different between the core and the surface layer, further improving rate performance, high voltage resistance, cycle life, material impedance, etc., of the cathode material.

The preparation method of the present disclosure is specifically described below with reference to the embodiments.

Step S10: performing a primary sintering on a mixture including a cathode material precursor and a lithium-containing compound to obtain a core matrix material. The core matrix material has a chemical formula of Li_{1-δ}NiₐCo_{b}M_{c}M1_{1-a-b-c}O₂, where -0.05≤δ≤0.05, 0.3≤a < 1.0, 0.01≤b≤0.3, 0≤c≤0.5, 0≤1-a-b-c≤0.05, M denotes Mn and/or Al, and M1 denotes a metal element.

In some embodiments, the cathode material precursor has a chemical formula of Niₐ₁Co_{b1}M1_{c1}(OH)₂, where 0.3≤a1<1.0, 0.01≤b1≤0.3, and 0≤c1≤0.5.

In some embodiments, the lithium-containing compound includes at least one of lithium carbonate, lithium hydroxide, lithium nitrate, lithium fluoride, and lithium acetate. For example, the lithium-containing compound includes lithium hydroxide. For example, the lithium hydroxide includes at least one of anhydrous lithium hydroxide and monohydrate lithium hydroxide.

In some embodiments, a molar ratio of a metal Me in the precursor of the cathode material to Li in the lithium-containing compound is 1:1≤Li/Me≤1:1.3, which may be specifically 1:1, 1:1.02, 1:1.05, 1:1.08, 1:1.09, 1:1.1, 1:1.2, 1:1.25, or 1:1.3, etc., which is not limited herein.

In some embodiments, the first mixture further includes a first dopant. A metal element M1 in the first dopant includes at least one of Zr, Sr, Nb, Mo, Y, Co, Ti, Zr, Mg, B, and W.

In some embodiments, an addition amount of the first dopant in the first mixture is controlled to be in a mass proportion of 0.001 wt% to 2 wt%, which may be specifically 0.001 wt%, 0.005 wt%, 0.007 wt%, 0.009 wt%, 0.01 wt%, 0.05 wt%, 0.08 wt%, 0.1 wt%, 0.5 wt%, 0.8 wt%, 1 wt%, 1.2 wt%, 1.5 wt%, 1.8 wt%, or 2 wt%, etc., or other value within the above range, which is not limited herein.

In some embodiments, the first mixture has a mixing speed of ≥300 rpm/min, and a duration of ≥15 minutes.

In some embodiments, the primary sintering has a temperature of 700°C to 1000°C, which may be specifically 700°C, 750°C, 800°C, 850°C, 900°C, 950°C, or 1000°C, etc., or other value within the above range, which is not limited herein.

In some embodiments, the primary sintering has a duration of 4 h to 10 h, which may be specifically 4 h, 5 h, 6 h, 7 h, 8 h, 9 h, or 10 h, etc., or other value within the above range, which is not limited herein.

In some embodiments, the primary sintering is performed in an oxygen-containing atmosphere. The oxygen-containing gas accounts for an oxygen content of greater than or equal to 90%, which may be specifically 90%, 91%, 92%, 93%, 94%, 95%, 96%, 97%, or 100%, etc., or other value within the above range, which is not limited herein. For example, the oxygen-containing gas has an oxygen content of greater than or equal to 95%.

In some embodiments, a device for the primary sintering includes a stationary box furnace, a continuous roller kiln, etc.

In some embodiments, a product after subjecting to the primary sintering is crushed, screened, and demagnetized, to obtain a core matrix material with a suitable particle size.

Step S20: performing a secondary sintering on a second mixture including a surface reconstruction material and the core matrix material to obtain the cathode material.

In some embodiments, mixing the core matrix material and the surface reconstitution material in a mixed gas containing CO₂ to obtain the second mixture, where the CO₂ accounts for a concentration of ≥80% in the mixed gas. The second mixture is mixed in the mixed gas containing CO₂ because the carbon dioxide gas tends to react with the lithium-containing compound (such as Li₂O or LiOH) on surface of the core matrix material in the second mixture, to form Li₂CO₃ attached to surface of particles of the core matrix material, so that the subsequently added surface reconstruction material is easier to react with the core matrix material to form the Li-containing compound, thereby reconstructing the surface of the core matrix material.

In some embodiments, the mixed gas containing CO₂ contains moisture accounting for a volume proportion of 5 vol% to 10 vol%, further increasing the rate and degree of the reaction.

It should be noted that, in the present disclosure, by controlling mixing conditions and mixing atmosphere of the second mixture, the surface reconstruction material in the second mixture is more uniformly and firmly attached on surface of the core matrix material. In an actual mixing process, corresponding adjustments may further be made according to actual conditions.

It can be understood that, during the secondary sintering, the second mixture of the surface reconstruction material and the core matrix material sintered. The surface reconstruction material has a high uniformity on composition elements with that of the core matrix material, thus a difference in their lattice parameters is less. In addition, the surface reconstruction material of the present disclosure has a stronger ability to bind to Li element than that of the core matrix material, and has a lower Ni molar content and a higher Co and/or M molar content than that of the core matrix material. Co and M have a stronger binding ability to Li than that of Ni to Li. Therefore, during the secondary sintering, Co and M in the surface reconstruction material extracts part of Li from the core matrix material to participate in surface reconstruction of the cathode material. The surface reconstruction material plays a role as "pumping", so that in the prepared cathode material, the surface reconstruction layer has a higher Li molar content than that of the core.

In some embodiments, the surface reconstruction material includes at least one of NiᵣCoₚM_{q}M3_{1-r-p-q}(OH)₂, NiᵣCoₚM_{q}M3_{1-r-p-q}OOH, and (NiᵣCoₚM_{q}M3_{1-r-p-q})O₄, where 0≤r≤0.5, 0.3≤p≤1, 0≤q≤0.5, 0≤1-r-p-q≤0.2, 1≤d≤2, M denotes Mn and/or Al, and M3 denotes a metal element. Co and M in the surface reconstruction material have a stronger binding ability to Li ion than that of Ni in the core matrix material to Li.

In some embodiments, the metal element M3 includes at least one of Al, Ti, Y, Zr, Mg, Sr, W, Nb, Ce, La, Mo, and Dy.

In some embodiments, the surface reconstruction material has a number weighted median particle size of 10 nm to 1000 nm, which may be specifically 10 nm, 20 nm, 30 nm, 40 nm, 50 nm, 80 nm, 100 nm, 300 nm, 500 nm, 800 nm or 1000 nm, etc., or other value within the above range, which is not limited herein.

In some embodiments, the surface reconstruction material has an apparent density of ≤0.6 g/cm³, which may be specifically 0.6 g/cm³, 0.5 g/cm³, 0.4 g/cm³, 0.3 g/cm³, 0.35 g/cm³, 0.25 g/cm³, 0.2 g/cm³, 0.15 g/cm³, or 0.1 g/cm³, etc., or other value within the above range, which is not limited herein.

In some embodiments, the surface reconstruction material has a specific surface area of ≥20 m²/g, which may be specifically 20 m²/g, 30 m²/g, 50 m²/g, 80 m²/g, 100 m²/g, or 120 m²/g, etc., or other value within the above range, which is not limited herein.

In the present disclosure, by controlling particle size, apparent density, and specific surface area of the surface reconstruction material, size of the surface reconstruction material is controlled at a nanometer level. The surface reconstruction material in fine particle scale is easily and uniformly adhered to surface of the core matrix material, and improve activity of the surface reconstruction reaction, which facilitates to form a surface reconstruction layer with a high lithium molar content in the cathode material, thereby improving cycle stability of the cathode material.

In some embodiments, a molar ratio of the core matrix material to the surface reconstruction material is 1:(0.01-0.1), which may be specifically 1:0.01, 1:0.03, 1:0.05, 1:0.08, 1:0.09, or 1:0.1, etc., or other value within the above range, which is not limited herein. Due to introduction of the surface reconstruction material, the surface reconstruction layer of the cathode material is effectively formed, thereby effectively forming Li concentration difference between the core and the surface layer. While when it has an excessive addition amount, the surface reconstruction material is thus too thick, greatly increasing time for Li⁺ to diffuse from the core to the surface layer, and reducing effects owned to Li concentration difference between the core and the surface layer. Meanwhile, due to excessive thick of the surface reconstruction layer, stress of the core is not effectively transferred to surface during charging and discharging. In an example, a molar ratio of the core matrix material to the surface reconstruction material is1:(0.02-0.05).

In some embodiments, the second mixture further includes a second dopant. A metal element M1 in the second dopant includes at least one of Zr, Sr, Nb, Mo, Y, Co, Ti, Zr, Mg, B, and W.

In some embodiments, an addition amount of the second dopant in the second mixture is controlled to be in a mass proportion of 0.01 wt% to 2 wt%, which may be specifically 0.01 wt%, 0.05 wt%, 0.08 wt%, 0.1 wt%, 0.5 wt%, 0.8 wt%, 1 wt%, 1.2 wt%, 1.5 wt%, 1.8 wt% or 2 wt%, etc., or other value within the above range, which is not limited herein.

In some embodiments, the second mixture has a mixing speed of ≥300 rpm/min, and a duration of ≥15 minutes.

It should be noted that, in the present disclosure, by controlling mixing conditions of the second mixture, each components in the second mixture is mixed to a uniform state. In an actual mixing process, corresponding adjustments may further be made according to actual conditions.

In some embodiments, the secondary sintering has a temperature of 600°C to 900°C, which may be specifically 600°C, 650°C, 700°C, 750°C, 800°C, 850°C or 900°C, etc., or other value within the above range, which is not limited herein. As the temperature of the secondary sintering increases, concentration of lithium element at grain boundary on surface of the matrix material near to coating layer also increases. However, when too much lithium element is extracted to the surface layer, transition of the layered structure of the core cathode material to spinel and/or rock salt phase is affected, resulting in a structure change in the cathode material, and affecting discharge capacity of the cathode material.

In some embodiments, the secondary sintering has a duration of 4 h to 10 h, which may be specifically 4 h, 5 h, 6 h, 7 h, 8 h, 9 h, or 10 h, etc., or other value within the above range, which is not limited herein.

In some embodiments, the secondary sintering is performed in an oxygen-containing atmosphere. The oxygen-containing gas accounts for an oxygen content of greater than or equal to 20%, which may be specifically 20%, 30%, 40%, 50%, 60%, 70%, 80%, 90%, or 100%, etc., or other value within the above range, which is not limited herein. For example, the oxygen-containing gas has an oxygen content of greater than or equal to 40%.

In some embodiments, a device for the secondary sintering includes a stationary box furnace, a continuous roller kiln, etc.

Embodiments of the present disclosure further provide a battery. FIG. 2 is a schematic diagram of a battery in a discharging state according to an embodiment of the present disclosure. As shown in FIG. 2, the battery includes a housing and an electrode assembly. The electrode assembly includes a cathode plate 1, an anode plate 2, and a separator 3 arranged between the cathode plate 1 and the anode plate 2. The electrode assembly may be a laminated structure, which is formed by alternately stacking the cathode plate 1, the separator 3 and the anode plate 2 in sequence. In other embodiments, the electrode assembly may be a winding structure, which is formed by stacking the cathode plate, the separator and the anode plate in sequence and then winding.

In some embodiments, the cathode plate 1 includes a cathode current collector 101 and a cathode active layer 102 arranged on at least one surface of the cathode current collector 101.

In some embodiments, the cathode current collector 101 adopts an aluminum foil or a nickel foil, or any composite current collector disclosed in the prior art, such as, but not limited to, a current collector formed by combining the aforementioned conductive foil (aluminum foil or nickel foil, etc.) and a polymer substrate. The cathode active layer 102 includes a cathode active material including the cathode material described above.

In some embodiments, the anode plate 2 includes an anode current collector 201 and an anode active material layer 202 arranged on at least one surface of the anode current collector.

In some embodiments, the anode current collector 201 adopts at least one of copper foil, nickel foil, stainless steel foil, titanium foil, or carbon-based current collector, or any composite current collector disclosed in the prior art, such as, but not limited to, a current collector formed by combining the foregoing conductive foil and polymer substrate. The anode active material layer 202 includes an anode material including at least one of the following materials: artificial graphite, natural graphite, soft carbon, hard carbon, silicon-based material, tin-based material, and lithium titanate. The silicon-based material is selected from at least one of elemental silicon, silicon-oxygen compound, silicon carbon compound, silicon nitrogen compound, and silicon alloy. The tin-based material is selected from at least one of elemental tin, tin oxygen compound, and tin alloy. However, the present disclosure is not limited to these materials, and other conventional materials used as an anode active material for a battery are also adopted. These anode active materials are used alone or in combination of two or more. The battery according to embodiments of the present disclosure has the advantages of high capacity, high initial efficiency, long cycle life, excellent rate performance, and low expansion. The battery is a lithium ion battery, a sodium ion battery, or a solid-state electrolyte battery, which is not limited herein.

The above are merely preferred embodiments of the present disclosure and are not intended to limit the present disclosure. Any modifications, equivalent substitutions, or improvements made within the spirit and principle of the present disclosure shall fall within the scope of the present disclosure.

### Test Method:

### 1) Test for Specific Surface Area of Cathode Material:

The specific surface area of the cathode material was tested by a nitrogen adsorption specific surface area analysis test method and calculated by a Brunauer Emmett Teller (BET) method. The nitrogen adsorption specific surface area analysis test method was carried out by a Tri Star II specific surface and pore analyzer of Micromeritics Company of the United States.

### 2) SEM Test:

A surface topography photograph of the material was obtained by a Japanese Hitachi Regulus8100 cold field emission scanning electron microscope.

### 3) Test for Molar Content of each Elements in Cathode Material:

The contents of each elements in the cathode material were determined by a well-known instrument for qualitative analysis and/or quantitative analysis of each elements, such as ICP and ICP-MS.

### 4) The method for testing the Li molar contents of the core and the surface reconstruction layer of the cathode material including:

Firstly, 0.3 g of cathode material was weighed, and 8 mL of aqua regia was diluted by 5 times and then added into the cathode material for dissolution under heating, with an ambient temperature controlled to be 300°C and a dissolution time of 30 minutes, the obtained solution was filtered, washed, fixed in volume, diluted by 100 times, and tested by ICP to measure the molar contents of Li, Ni, Co, M and M1. The aqua regia was prepared from concentrated hydrochloric acid and concentrated nitric acid in a volume ratio of 3:1. The concentration of the concentrated hydrochloric acid used was 12 mol/L, and the concentration of the concentrated nitric acid used was 14.5 mol/L. The molar contents of each elements of the cathode material in fully dissolved state were calculated as follows:
(i) The total molar weight of Ni, Co, M, and M1 is w1, and n(Ni), n(Co), and n(M) are obtained after normalization;
(ii) [n(Li): n(Ni+Co+Mn+M1)]=m_{Li total};
(iii) [n(N): n(Ni+Co+M+M1)]=b1N, N= Ni or Co or M; and
(iv) [n(M1+M2):n(Ni+Co+M+M1)]=c1.

Secondly, 0.3 g of cathode material was weighed, and 0.4 mL of aqua regia was diluted by 100 times and then added to the cathode material for dissolution under heating, with an ambient temperature controlled to be 300°C and a dissolution time of 30 minutes, the obtained solution was filtered, washed, fixed in volume, diluted by 100 times, and tested by ICP to measure the molar contents of Li, Ni, Co, M and M1 of the surface reconstruction layer.

The molar contents of each elements of the surface layer in the dissolved state of the cathode material were calculated as follows:
(i) The total molar weight of Ni, Co, M, and M1 is w2, and n(Ni), n(Co) and n(M) are obtained after normalization;
(ii) [n(Li):n(Ni+Co+M+M1)]=m2 in the surface reconstruction layer;
(iii) [n(N): n(Ni+Co+M+M1)]=b2N, N=Ni or Co or M;
(iv) [n(M1+M2):n(Ni+Co+M+M1)]=c2; and
(v) The percentage content by mass of the surface reconstruction layer is η=w2/w1.

The molar contents of each elements in the core of the cathode material were calculated by the molar contents of each elements corresponding to the whole material and the surface reconstruction layer, and the calculation process was as follows:

Thirdly, the molar contents of Li, Ni, Co, M and M1 in the core were calculated as follows:
(i) The total molar content of Ni, Co, M and M1 in the core is w3=w1-w2, and n(Ni), n(Co) and n(M) are obtained after normalization;
(ii) [n(Li):n(Ni+Co+M+M1)]= [(m_{Li total}*w1- m2*w2)/w3]=m1;
(iii) [n(N):n(Ni+Co+M+M1)]=[ (b1N*w1-b2N*w2)/w3]=vN, N= Ni or Co or M; and
(iv) [n(M1+M2): n(Ni+Co+M+M1)]=[ (c1*wl-c2*w2)/w3]=x.

When |m2-m1|≥0.01, it can be determined that the tested cathode material has a Li concentration difference between the surface reconstruction layer and the core. The larger the value of |m2-m1|, the more significant the variation of the Li molar content difference of the corresponding cathode material.

When |b1N-b2N|≥0.01, it can be determined that the tested cathode material has concentration differences of Ni and/or Co and/or M between the surface reconstruction layer and the core. The larger the values of |b1N-b2N|, the more significant the variation of the molar content differences of Ni and/or Co and/or M of the corresponding cathode material.

When |c1-c2|≥0.001wt%, it can be determined that the tested cathode material has a concentration difference of metal elements between the surface reconstruction layer and the core.

### 5) Test for Content by Mass of Free Lithium:

5 g of cathode material was dispersed in 100 ml of deionized water, stirred magnetically for 10 minutes with a water temperature maintained at 25°C to obtain a solid-liquid mixture containing dissolved residual lithium carbonate and lithium hydroxide. The solid-liquid mixture was performed suction filtration to obtain a filtrate, and added a hydrochloric acid solution at an automatic potentiometric titration instrument for titrating by equivalent quantity dropping. The lithium content in lithium carbonate and lithium hydroxide of the cathode material was calculated depending on breakthrough points and a consumption of the hydrochloric acid solution.

### Example 1

A preparation method of a cathode material, including the following steps:
(1) Ni_{0.80}Co_{0.01}Mn_{0.098}(OH)₂ precursor, LiOH·H₂O, and dopant ZrO₂ were added into a high-speed mixer in a molar ratio of 1:1.02:0.002 and mixed uniformly to obtain a first mixture, where a stirring speed was 1000 rpm, and a stirring time was 30 minutes;
(2) the mixture was calcined in a pure oxygen atmosphere at a calcination temperature of 880°C for 8 hours, then the sintered product was cooled, roller crushed, pulverized by air flow, sieved through a 400-mesh screen, and demagnetized to obtain a matrix material Li_{1.02}Ni_{0.8}Co_{0.1}Mn_{0.098}Zr_{0.002}O₂;
(3) the core matrix material Li_{1.02}Ni_{0.8}Co_{0.1}Mn_{0.098}Zr_{0.002}O₂ was uniformly mixing with the surface reconstruction material Ni_{0.08}Co_{0.8}Mn_{0.08}Al_{0.04}OOH in a molar ratio of 1:0.02 by a high-speed mixer to obtain a second mixture, where a stirring speed was 1000 rpm, and a stirring time was 30 minutes, and stirring was performed in a mixed gas including carbon dioxide gas with a volume proportion of 95% and water vapor with a volume proportion of 0.05%; and
(4) the second mixture was sintered at 730°C for 8 hours under a sintering atmosphere of pure oxygen, then cooled, roller crushed, sieved by a 400-mesh screen, and demagnetized to obtain the cathode material.

The chemical composition of the cathode material is Li_{0.986}Ni_{0.8}Co_{0.1}Mn_{0.098}Zr_{0.002}O₂·0.02Li_{1.70}Ni_{0.08}Co_{0.8}Mn_{0.08}Al_{0.04}O₂.

Example 2 to Example 17 (abbreviated as S1 to S17) and Comparative Examples (abbreviated as D1 to D2) were prepared according to the steps of Example 1 excepting the differences of the preparation processes shown in Table 1. The properties of the prepared cathode materials are shown in Table 2:

**Table 1. Preparation Process Parameters of Cathode Materials**

| Sa mpl e | Precursor | Lithium salt | n(Li):n(Precursor):n(Dopant) | Primary Sintering Temperature/°C and Time/h | Surface reconstruction Material | Molar ratio of Surface Reconstruction Material to Matrix Material | Secondar y Sintering Temperat -ure/°C and Time/h |
|---|---|---|---|---|---|---|---|
| S1 | Ni_{0.8}Co_{0.1}Mn_{0.098}(OH)₂ | LiOH·H₂O | 1.02:1:0.002 | 880, 8 | Ni_{0.08}Co_{0.8}Mn_{0.08}Al_{0.04}OOH | 0.02 | 730, 8 |
| S2 | Ni_{0.8}Co_{0.1}Mn_{0.098}(OH)₂ | LiOH·H₂O | 1.02:1:0.002 | 880, 8 | Ni_{0.08}Co_{0.8}Mn_{0.08}Al_{0.04}OOH | 0.015 | 730, 8 |
| S3 | Ni_{0.8}Co_{0.1}Mn_{0.098}(OH)₂ | LiOH·H₂O | 1.02:1:0.002 | 880, 8 | Ni_{0.08}Co_{0.8}Mn_{0.08}Al_{0.04}OOH | 0.025 | 730, 8 |
| S4 | Ni_{0.8}Co_{0.1}Mn_{0.098}(OH)₂ | LiOH·H₂O | 1.02:1:0.002 | 880, 8 | Ni_{0.08}Co_{0.8}Mn_{0.08}Al_{0.04}OOH | 0.085 | 730, 8 |
| S5 | Ni_{0.7}Co_{0.1}Mn_{0.198}(OH)₂ | LiOH·H₂O | 1.03:1:0.002 | 920, 8 | Ni_{0.08}Co_{0.8}Mn_{0.08}Al_{0.04}OOH | 0.02 | 730, 8 |
| S6 | Ni_{0.6}Co_{0.2}Mn_{0.198}(OH)₂ | LiOH·H₂O | 1.04:1:0.002 | 940, 8 | Ni_{0.08}Co_{0.8}Mn_{0.08}Al_{0.04}OOH | 0.02 | 730, 8 |
| S7 | Ni_{0.6}Co_{0.1}Mn_{0.299}(OH)₂ | Li₂CO₃ | 1.04:1:0.001 | 970, 8 | Ni_{0.08}Co_{0.8}Mn_{0.08}Al_{0.04}OOH | 0.02 | 730, 8 |
| S8 | Ni_{0.5}Co_{0.2}Mn_{0.299}(OH)₂ | Li₂CO₃ | 1.05:1:0.001 | 980, 8 | Ni_{0.08}Co_{0.8}Mn_{0.08}Al_{0.04}OOH | 0.02 | 730, 8 |
| S9 | Ni_{0.5}Co_{0.2}Mn_{0.299}(OH)₂ | Li₂CO₃ | 1.05:1:0.001 | 980, 8 | Ni_{0.08}Co_{0.8}Mn_{0.08}Al_{0.04}OOH | 0.04 | 850, 8 |
| S10 | Ni_{0.88}Co_{0.08}Al_{0.04}(OH)₂ | LiOH·H₂O | 1.02:1:0.002 | 820, 8 | Ni_{0.08}Co_{0.8}Mn_{0.08}Al_{0.04}OOH | 0.02 | 730, 8 |
| S11 | Ni_{0.33}Co_{0.33}Mn_{0.328}(OH)₂ | Li₂CO₃ | 1.05:1:0.001 | 995, 8 | Ni_{0.08}Co_{0.8}Mn_{0.08}Al_{0.04}OOH | 0.04 | 850, 8 |
| S12 | Ni_{0.4}Co_{0.2}Mn_{0.398}(OH)₂ | Li₂CO₃ | 1.05:1:0.001 | 985, 8 | Ni_{0.08}Co_{0.8}Mn_{0.08}Al_{0.04}OOH | 0.04 | 850, 8 |
| S13 | Ni_{0.9}CO_{0.05}Mn_{0.048}(OH)₂ | LiOH·H₂O | 1.02:1:0.002 | 780, 8 | Ni_{0.08}Co_{0.8}Mn_{0.08}Al_{0.04}OOH | 0.02 | 650, 8 |
| S14 | Ni_{0.8}Co_{0.1}Mn_{0.098}(OH)₂ | LiOH·H₂O | 1.02:1:0.002 | 860, 8 | Ni_{0.08}Co_{0.8}Mn_{0.08}Al_{0.04}OOH | 0.02 | 750, 8 |
| S15 | Ni_{0.8}Co_{0.1}Mn_{0.098}(OH)₂ | LiOH·H₂O | 1.02:1:0.002 | 900, 6 | Ni_{0.08}Co_{0.8}Mn_{0.08}Al_{0.04}OOH | 0.02 | 730, 8 |
| S16 | Ni_{0.8}Co_{0.1}Mn_{0.098}(OH)₂ | LiOH·H₂O | 1.02:1:0.002 | 880, 8 | Ni_{0.08}Co_{0.8}Mn_{0.08}Al_{0.04}(OH)_{2.04} | 0.02 | 730, 8 |
| S17 | Ni_{0.8}Co_{0.1}Mn_{0.098}(OH)₂ | LiOH·H₂O | 1.04:1:0.002 | 900, 6 | Ni_{0.08}Co_{0.8}Mn_{0.08}Al_{0.04}O_{1.50} | 0.04 | 835, 6 |
| D1 | Ni_{0.8}Co_{0.1}Mn_{0.1}(OH)₂ | LiOH·H₂O | 1.02:1.0 | 880, 8 | / | / | 730, 8 |
| D2 | Ni_{0.8}Co_{0.1}Mn_{0.1}(OH)₂ | LiOH·H₂O | 1.02:1.0 | 880, 8 | B₂O₃ | 0.003 | 350, 8 |

**Table 2. Physicochemical Parameters of Cathode Materials**

| Sa mpl e | General Formula of Cathode Material | Free Li ppm | Spec ific surf ace area m²·g -1 | Differe -nce of Ni Conten t Inside and Outsid e | Difference of Co Conten t Inside and Outsid e | Differe -nce of M Conten t Inside and Outsid e | Mass propor tion of surface reconst ruction layer wt% | m_{Li} total | m2 | ml | cl-c2 |
|---|---|---|---|---|---|---|---|---|---|---|---|
| S1 | Li_{0.986}Ni_{0.8}Co_{0.1}Mn_{0.098}Zr_{0.002}O₂·0. 02Li_{1.70}Ni_{0.08}Co_{0.8}Mn_{0.08}Al_{0.04}O₂ | 380 | 0.63 | 0.054 | -0.056 | -0.001 | 28 | 1.00 | 1.70 | 0.73 | -0.0044 |
| S2 | Li_{0.992}Ni_{0.8}Co_{0.1}Mn_{0.098}Zr_{0.002}O₂·0. 015Li_{1.87}Ni_{0.08}Co_{0.8}Mn_{0.08}Al_{0.04}O₂ | 399 | 0.49 | 0.051 | -0.052 | -0.001 | 27 | 1.01 | 1.87 | 0.69 | -0.0036 |
| S3 | Li_{0.983}Ni_{0.8}Co_{0.1}Mn_{0.098}Zr_{0.002}O₂·0. 025L_{1.48}Ni_{0.08}Co_{0.8}Mn_{0.08}Al_{0.04}O₂ | 416 | 0.48 | 0.062 | -0.064 | -0.002 | 29 | 0.99 | 1.48 | 0.80 | -0.0042 |
| S4 | Li_{0.922}Ni_{0.8}Co_{0.1}Mn_{0.098}Zr_{0.002}O₂·0. 085Li_{1.15}Ni_{0.08}C_{00.8}Mn_{0.08}Al_{0.04}O₂ | 240 | 0.92 | 0.107 | -0.096 | -0.011 | 25 | 0.95 | 1.15 | 0.88 | -0.0092 |
| S5 | Li_{0.987}Ni_{0.7}Co_{0.1}Mn_{0.198}Zr_{0.002}O₂·0. 02Li_{1.43}Ni_{0.08}Co_{0.8}Mn_{0.08}Al_{0.04}O₂ | 403 | 0.50 | 0.076 | -0.077 | -0.002 | 26 | 1.00 | 1.43 | 0.85 | -0.0027 |
| S6 | Li_{0.985}Ni_{0.6}Co_{0.2}Mn_{0.198}Zr_{0.002}O₂·0. 02L_{1.38}Ni_{0.08}C_{00.8}Mn_{0.08}Al_{0.04}O₂ | 391 | 0.47 | 0.074 | -0.077 | -0.003 | 26 | 1.01 | 1.38 | 0.87 | -0.0032 |
| S7 | Li_{0.986}Ni_{0.6}Co_{0.1}Mn_{0.299}Zr_{0.002}O₂·0. 02L_{1.35}Ni_{0.08}Co_{0.8}Mn_{0.08}Al_{0.04}O₂ | 351 | 0.45 | 0.104 | -0.106 | -0.002 | 27 | 1.01 | 1.35 | 0.87 | -0.0019 |
| S8 | Li0_{.995}Ni_{0.5}Co_{0.2}Mn_{0.299}Zr_{0.001}O₂·0. 02Li_{1.10}Ni_{0.08}Co_{0.8}Mn_{0.08}Al_{0.04}O₂ | 515 | 0.66 | 0.052 | -0.054 | -0.002 | 28 | 1.02 | 1.10 | 0.96 | -0.0034 |
| S9 | Li_{0.933}Ni_{0.5}Co_{0.2}Mn_{0.299}Z_{0.001}O₂·0. 04Li_{2.93}Ni_{0.08}Co_{0.8}Mn_{0.08}Al_{0.04}O₂ | 267 | 0.58 | 0.045 | -0.046 | -0.001 | 10 | 1.01 | 2.93 | 0.8 | -0.0024 |
| S10 | Li_{0.996}Ni_{0.88}Co_{0.08}Al_{0.04}Zr_{0.002}O₂·0. 02Li_{1.20}Ni_{0.08}Co_{0.8}Mn_{0.08}Al_{0.04}O₂ | 632 | 0.85 | 0.064 | -0.063 | -0.001 | 32 | 1.00 | 1.20 | 0.91 | -0.0030 |
| S11 | Li_{0.999}Ni_{0.33}Co_{0.33}Mn_{0.328}Zr_{0.002}O₂· 0.04Li_{1.20}Ni_{0.08}Co_{0.8}Mn_{0.08}Al_{0.04}O₂ | 213 | 0.45 | 0.013 | -0.010 | -0.040 | 21 | 1.00 | 1.27 | 0.94 | -0.0025 |
| S12 | Li_{0.996}Ni_{0.4}Co_{0.2}Mn_{0.398}Zr_{0.002}O₂·0. 04Li_{1.20}Ni_{0.08}Co_{0.8}Mn_{0.08}Al_{0.04}O₂ | 236 | 0.53 | 0.018 | -0.015 | -0.003 | 17 | 1.00 | 1.36 | 0.94 | -0.0028 |
| S13 | Li_{0.992}Ni_{0.9}Co_{0.05}Mn_{0.048}Zr_{0.002}O₂· 0.02Li_{1.20}Ni_{0.08}Co_{0.8}Mn_{0.08}Al_{0.04}O₂ | 819 | 0.82 | 0.061 | -0.060 | -0.001 | 30 | 1.00 | 1.42 | 0.82 | -0.0032 |
| S14 | Li_{0.973}Ni_{0.8}Co_{0.1}Mn_{0.098}Zr_{0.002}O₂·0. 02Li_{2.35}Ni_{0.08}Co_{0.8}Mn_{0.08}Al_{0.04}O₂ | 428 | 0.61 | 0.055 | -0.056 | -0.001 | 9 | 1.00 | 2.35 | 0.87 | -0.0026 |
| S15 | Li_{0.994}Ni_{0.8}Co_{0.1}Mn_{0.098}Zr_{0.002}O₂·0. 02Li_{1.31}Ni_{0.08}Co_{0.8}Mn_{0.08}Al_{0.04}O₂ | 421 | 0.71 | 0.057 | -0.055 | -0.002 | 24 | 1.00 | 1.31 | 0.90 | -0.0053 |
| S16 | Li_{0.984}Ni_{0.8}Co_{0.1}Mn_{0.098}Zr_{0.002}O₂·0. 04Li_{1.80}Ni_{0.08}Co_{0.8}Mn_{0.08}Al_{0.04}O₂ | 365 | 0.46 | 0.052 | -0.055 | -0.003 | 33 | 1.00 | 1.80 | 0.61 | -0.0033 |
| S17 | Li_{0.990}Ni_{0.8}Co_{0.1}Mn_{0.098}Zr_{0.002}O₂·0. 04Li_{1.25}Ni_{0.08}Co_{0.8}Mn_{0.08}Al_{0.04}O₂ | 468 | 0.54 | 0.044 | -0.060 | -0.015 | 43 | 1.00 | 1.25 | 0.81 | -0.0017 |
| D1 | Li_{1.02}Ni_{0.8}Co_{0.1}Mn_{0.1}O₂ | 824 | 0.82 | 0.001 | 0.002 | 0.001 | 26 | 1.00 | 1.00 | 1.00 | -0.00007 |
| D2 | Li_{1.011}Ni_{0.8}Co_{0.1}Mn_{0.1}O₂·0.003Li₃ BO₃ | 380 | 0.63 | 0.002 | 0.001 | 0.001 | 28 | 1.00 | 6.67 | 1.03 | 0.00006 |

### Preparation of Cathode Plate

The cathode material prepared in Examples or Comparative Examples, a conductive agent acetylene black, and a binder polyvinylidene fluoride (PVDF) were dissolved in a solvent N-methylpyrrolidone (NMP) in a weight ratio of 93:5:2, fully stirred to obtain a cathode slurry, to coat on an aluminum foil, and then dried and pressed into sheet to obtain a cathode plate. A metal lithium sheet as an anode sheet, a polyethylene film as a separator, and a solution of 1 mol/L lithium hexafluorophosphate in diethyl carbonate and ethylene carbonate with a volume ratio of 1:1 as an electrolyte were assembled into a 2032-button battery.

The charge-discharge test was performed by a LAND battery testing system CT2001A at voltage range of 2.5V to 4.3V for capacity, initial effect and rate performance.

The prepared button batteries adopted the above Examples and Comparative Examples were performed cyclic charging and discharging at room temperature (25°C) at a charge-discharge rate of 0.1C and within a charge-discharge voltage of 2.5V-4.3V. An initial discharge capacity and an initial coulombic efficiency were measured. A ratio of capacity after 50 cycles to the initial discharge capacity was recorded as a normal temperature cycling performance.

The above assembled button batteries were performed cyclic charging and discharging at room temperature (25°C) at a charge-discharge rate of 0.1C and within a charge-discharge voltage of 2.5V-4.3V for 2 cycles, and then charged to a fully charged state of 4.3V. An electrochemical impedance spectroscopy (EIS) test was performed by CHI600E electrochemical workstation purchased from CH Instruments, Shanghai, with a test frequency of 100kHz to 10mHz and an amplitude of 5mV, to obtain an electrochemical impedance performance.

**Table 3. Performance Parameters of Cathode Materials and Batteries**

| Number | Test Voltage V | Gram capacity mAh·g⁻¹ | 2C/0.1C Rate % | Cycling Retention Rate % | Expansion Ratio % | Battery Impedance mΩ |
|---|---|---|---|---|---|---|
| Example1 | 4.25 | 204.0 | 88.3 | 96.0 | 5.3 | 6 |
| Example 2 | 4.25 | 201.8 | 87.2 | 92.8 | 8.8 | 8 |
| Example 3 | 4.25 | 198.0 | 88.5 | 96.4 | 5.2 | 6 |
| Example 4 | 4.25 | 197.2 | 87.3 | 93.2 | 7.9 | 7 |
| Example 5 | 4.30 | 200.3 | 87.6 | 97.7 | 4.6 | 5 |
| Example 6 | 4.35 | 198.7 | 86.1 | 98.5 | 4.3 | 5 |
| Example 7 | 4.35 | 197.5 | 85.5 | 98.1 | 3.7 | 4 |
| Example 8 | 4.40 | 195.8 | 86.6 | 99.0 | 2.9 | 4 |
| Example 9 | 4.40 | 196.0 | 86.5 | 98.7 | 2.3 | 4 |
| Example 10 | 4.25 | 203.2 | 87.8 | 95.4 | 6.6 | 5 |
| Example 11 | 4.40 | 176.3 | 88.9 | 99.3 | 1.2 | 3 |
| Example 12 | 4.40 | 187.0 | 88.1 | 98.7 | 1.8 | 3 |
| Example 13 | 4.25 | 205.8 | 86.4 | 93.2 | 7.9 | 6 |
| Example 14 | 4.25 | 199.4 | 88.4 | 93.6 | 7.7 | 7 |
| Example 15 | 4.25 | 198.7 | 88.5 | 96.3 | 5.0 | 4 |
| Example 16 | 4.25 | 202.9 | 88.0 | 95.4 | 6.1 | 7 |
| Example 17 | 4.35 | 196.2 | 86.3 | 97.9 | 4.1 | 5 |
| Comparative Example 1 | 4.20 | 196.2 | 82.7 | 89.3 | 15.3 | 12 |
| Comparative Example 2 | 4.20 | 198.8 | 83.2 | 88.5 | 13.9 | 10 |

According to the test data of Examples 1 to 4, it can be seen that as the molar ratio of the surface reconstruction material to the matrix material increases, the Li molar content m2 of the surface reconstruction layer of the cathode material decreases, and the Li molar content m1 of the core increases. This is because the thicker the surface reconstruction material is, the weaker the extraction ability of Li is. Among them, too much or too less surface reconstruction material added in Examples 2 and 4 results in decreased gram capacity of the cathode materials. Due to less surface reconstruction material added in Example 2, the cycle retention rate of the cathode material decreases, and the expansion ratio increases.

According to the test data of Examples 5 to 13, it can be seen the influence of the core matrix materials with different Ni, Co and M contents on the performance of the cathode material. As the Ni content decreases, the gram capacity of the cathode material gradually decreases, the cycle retention rate gradually increases, and the expansion ratio gradually decreases.

According to the test data of Examples 14 and 15, it can be seen that different sintering temperatures and durations have little influence on electrochemical performance of the cathode material.

According to the test data of Examples 16 and 17, it can be seen that different surface reconstruction materials have little influence on electrochemical performance of the cathode material.

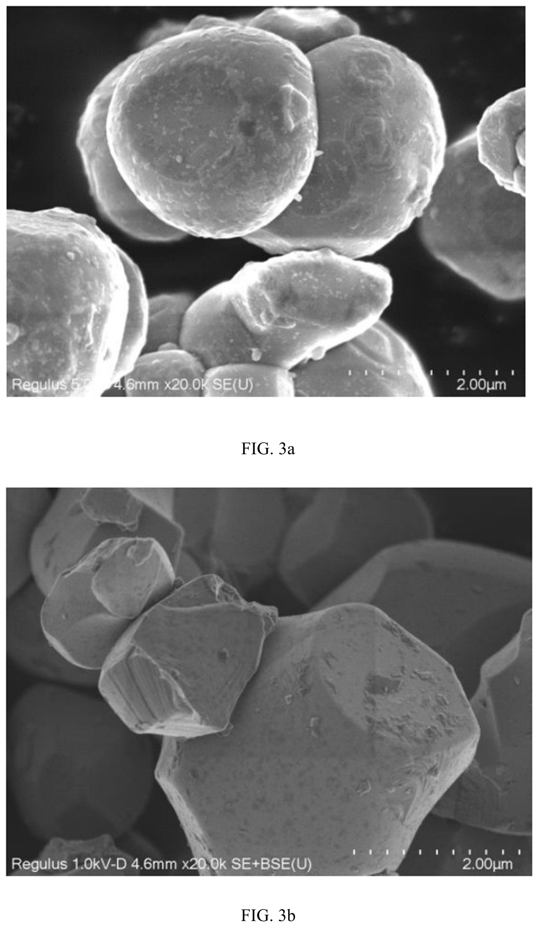

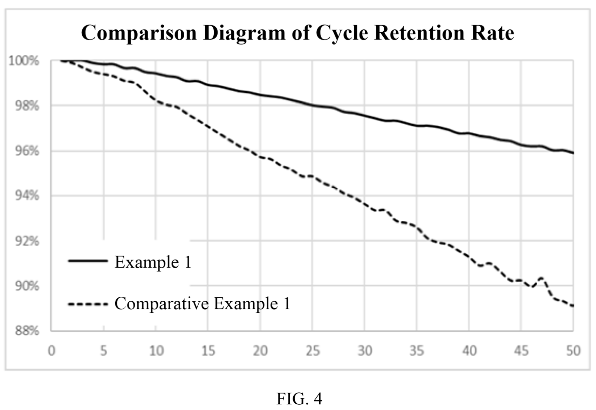

According to the test data of Examples and Comparative Example 1, it can be seen that due to no surface reconstruction material used for secondary sintering in the Comparative Example, the electrochemical performance of its cathode material is significantly reduced compared with that of all Examples. FIGs. 3a and 3b are SEM images of the cathode material and the matrix material of Example 1, respectively. It can be found that the particles of the cathode material of Example 1 become more rounded after surface reconstruction, thus withstanding higher stress without crushing. While the particles of the matrix material without surface reconstruction exhibit an irregular structure with clear edges and corners, and low particle strength, and are easily broken and crushed during cycling. FIG. 4 is a comparison diagram of cycling performances of the cathode materials of Example 1 and Comparative Example 1. It can be found that the cycling performance of the cathode material of Example 1 is better than that of the cathode material of Comparative Example 1.

According to the test data of Examples and Comparative Example 2, it can be seen that Comparative Example 2 used B₂O₃ to coat surface of the matrix material. Although its performance is improved compared with that of Comparative Example 1, since the molar contents of various elements in particles of its cathode material are not in a gradient distribution state, cycling performance of the cathode material is inferior to that of all Examples.

The preferred embodiments of the present disclosure are described in detail above, but the present disclosure is not limited thereto. Within the technical scope of the present disclosure, the technical solutions of the present disclosure may be subject to various simple variations, including combinations of various technical features in any other suitable manner, and these simple variations and combinations should also be regarded as the content disclosed in the present disclosure, all of which fall within the scope of the present disclosure.

## Claims

1. A cathode material, **characterized in that** the cathode material is a nickel-lithium cobalt oxide based composite oxide comprising a core and a surface reconstruction layer arranged outside the core, wherein the surface reconstruction layer is a region etched away by dissolving 0.3g of the cathode material with 100 times diluted 0.4 ml of aqua regia for 30 minutes, with an ambient temperature controlled to be 300°C during dissolution, and the core is a remaining region after the surface reconstruction layer is etched away from the cathode material, and wherein the core has a Li molar content of m1, the surface reconstruction layer has a Li molar content of m2, and 1.3≤m2/m1≤4.0.

2. A cathode material, **characterized in that** the cathode material is a nickel-lithium cobalt oxide based composite oxide comprising a core and a surface reconstruction layer arranged outside the core, wherein the surface reconstruction layer is a region etched away by dissolving 0.3g of the cathode material with 100 times diluted 0.4 ml of aqua regia for 30 minutes, with an ambient temperature controlled to be 300°C during dissolution, and the core is a remaining region after the surface reconstruction layer is etched away from the cathode material, and wherein the surface reconstruction layer has a Li molar content of m2, the cathode material has a total Li molar content of m_{Li total}, and 1.1≤m2/m_{Li total}≤3.0.

3. The cathode material according to claim 1 or 2, **characterized in that** the core has a greater Ni molar content than Ni molar content of the surface reconstruction layer.

4. The cathode material according to claim 1 or 2, **characterized in that** the core has a lower total molar content of remaining metal elements except Li and Ni than total molar content of remaining metal elements except Li and Ni of the surface reconstruction layer.

5. The cathode material according to claim 1 or 2, **characterized in that** the surface reconstruction layer has a chemical formula of Li_{1+λ}NiₓCo_{y}M_{z}M1_{1-x-y-z}O₂, wherein 0.01≤λ≤2, 0≤x≤0.5, 0.3≤y≤1, 0≤z≤0.5, 0≤1-x-y-z≤0.2, M denotes Mn and/or Al, and M1 denotes a metal element.

6. The cathode material according to claim 5, **characterized in that** 0.6≤m1<1, 0.1≤λ≤2; and/or, a molar ratio of the lithium element to all remaining metal elements in the cathode material is (0.95-1.05):1.

7. The cathode material according to claim 5, **characterized in that** the metal element M1 comprises at least one of Al, Ti, Y, Zr, Mg, Sr, W, Nb, Ce, La, Mo, and Dy.

8. The cathode material according to claim 1 or 2, **characterized in that** the surface reconstruction layer accounts for a percentage content by mass of 5 wt% to 50 wt% in the cathode material.

9. The cathode material according to claim 1 or 2, **characterized in that** the cathode material has free lithium accounting for a content by mass of 200 ppm to 1000 ppm.

10. The cathode material according to claim 1 or 2, **characterized in that** the cathode material has a specific surface area of 0.2 m²/g to 2.0 m²/g; and/or, the cathode material has a true density of 4.6 g/cm³ to 4.8 g/cm³.

11. A preparation method of a cathode material, **characterized in that** the preparation method comprises:
performing a primary sintering on a first mixture comprising a cathode material precursor and a lithium-containing compound to obtain a core matrix material, wherein the core matrix material has a chemical formula of Li_{1-δ}NiₐCo_{b}M_{c}M1_{1-a-8-c}O₂, wherein -0.05≤δ≤0.05, 0.3≤a < 1.0, 0.01≤b≤0.3, 0≤c≤0.5, 0≤1-a-b-c≤0.05, M denotes Mn and/or Al, and M1 denotes a metal element; and
performing a secondary sintering on a second mixture comprising a surface reconstruction material and the core matrix material to obtain the cathode material, wherein the surface reconstruction material comprises at least one of NiᵣCoₚM_{q}M3_{1-r-p-q}(OH)₂, NiᵣCoₚM_{q}M3_{1-r-p-q}OOH and (NiᵣCoₚM_{q}M3_{1-r-p-q})O_{d}, wherein 0≤r≤0.5, 0.3≤p≤1, 0≤q≤0.5, 0≤1-r-p-q≤0.2, 1≤d≤2, M denotes Mn and/or Al, and M3 denotes a metal element.

12. The preparation method according to claim 11, **characterized in that** the surface reconstruction material satisfies at least one of following features:
(1) the surface reconstruction material has a median particle size of 10 nm to1000 nm;
(2) the surface reconstruction material has an apparent density of ≤0.6 g/cm³; and
(3) the surface reconstruction material has a specific surface area of ≥20 m²/g.

13. The preparation method according to claim 11, **characterized in that** the metal elements M1 and M3 each independently comprise at least one of Al, Ti, Y, Zr, Mg, Sr, W, Nb, Ce, La, Mo and Dy.

14. The preparation method according to claim 11 or 12, **characterized in that** the preparation method satisfies at least one of following features:
(1) a molar ratio of the core matrix material to the surface reconstruction material is 1:(0.01-0.1);
(2) mixing the core matrix material and the surface reconstitution material in a mixed gas containing CO₂ to obtain the second mixture; and
(3) the secondary sintering has a temperature of 600°C to 900°C, and the secondary sintering has a duration of 4 h to 10 h.

15. A battery, **characterized in that** the battery comprises the cathode material according to any one of claims 1 to 10, or the cathode material obtained by the preparation method according to any one of claims 11 to 14.
